# EUROPEAN PATENT APPLICATION

(11) **EP 4 716 048 A1**
(43) Date of publication of application: **25.03.2026**
(21) Application number: 25199055.2
(22) Date of filing: 29.08.2025
(51) Int. Cl.: H02J 3/00, H02J 3/38, H02J 3/40, H02P 9/00, H02H 7/06

(54) **SYSTEM AND METHOD FOR MINIMIZING TRIPS IN A POWER GENERATING ASSET**

(30) Priority: 18.09.2024 US 202418888538
(71) Applicant: GE Vernova Infrastructure Technology LLC, Greenville, SC 29615 (US)
(72) Inventor: Ganireddy, Govardhan, Salem, VA, 24153 (US); Wilmer, David Scott, Salem, VA, 24153 (US); Sutherland, Steven Wade, Salem, VA, 24153 (US); Haque, Talha Irfanul, Salem VA, 24153 (US); Hardwicke, Edward Wayne, Greenville, SC, 29607 (US)
(74) Representative: Zimmermann & Partner Patentanwälte mbB

(57) **Abstract**

A method for minimizing trips in a power generating asset prior to synchronization includes providing a dynamic trip threshold to a protection scheme of the power generating asset and modifying the dynamic trip threshold prior to and after synchronization of the power generating asset to minimize the trips in the power generating asset caused by the protection scheme of the power generating asset.

## Description

### FIELD

The present disclosure relates generally to power generating assets, such as a wind turbine, and more particular to a system and method for minimizing trips in a power generating asset prior to synchronization.

### BACKGROUND

Wind power is considered one of the cleanest, most environmentally friendly energy sources presently available, and wind turbines have gained increased attention in this regard. A modern wind turbine typically includes a tower, generator, gearbox, nacelle, and one or more rotor blades. The rotor blades capture kinetic energy of wind using known airfoil principles. For example, rotor blades typically have the cross-sectional profile of an airfoil such that, during operation, air flows over the blade producing a pressure difference between the sides. Consequently, a lift force, which is directed from a pressure side towards a suction side, acts on the blade. The lift force generates torque on the main rotor shaft, which is geared to a generator for producing electricity.

During operation, wind impacts the rotor blades of the wind turbine, and the blades transform wind energy into a mechanical rotational torque that rotatably drives a low-speed shaft. The low-speed shaft is configured to drive the gearbox that subsequently steps up the low rotational speed of the low-speed shaft to drive a high-speed shaft at an increased rotational speed. The high-speed shaft is generally rotatably coupled to a generator so as to rotatably drive a generator rotor. As such, a rotating magnetic field may be induced by the generator rotor and a voltage may be induced within a generator stator that is magnetically coupled to the generator rotor. In certain configurations, the associated electrical power can be transmitted to a turbine transformer that is typically connected to a power grid via a grid breaker. Thus, the turbine transformer steps up the voltage amplitude of the electrical power such that the transformed electrical power may be further transmitted to the power grid.

In many wind turbines, the generator rotor may be electrically coupled to a bi-directional power converter that includes a rotor-side converter joined to a line-side converter via a regulated DC link. More specifically, some wind turbines, such as wind-driven doubly fed induction generator (DFIG) systems or full power conversion systems, may include a power converter with an AC-DC-AC topology. In such system, the generator stator is separately connected to the power grid via a main transformer.

Furthermore, in certain wind turbines, low voltage (LV) power cables are utilized in the tower to transfer power from the generator in the nacelle to the converter at the base of the tower. These LV cables can be very long (e.g., from about 100 meters (m) to about 150 m) depending on the height of the towers. The insulated cables have leakage capacitance between the cables and between the cables and the ground.

In addition, the wind turbine electrical system is grounded at the transformer. In such systems, there is a period during start-up (i.e., prior to closing a synchronizing contactor between the electrical system and the grid) when the generator-side stator circuit that involves the generator and the LV power cables in the tower are not grounded.

Moreover, there is a stator voltage common mode (SVCOM) protection scheme implemented in the converter control software to detect the presence of faults, such as insulation failures, short-circuits, high imbalance in generator output voltage, miswiring, etc. In particular, the SVCOM protection scheme is implemented in the generator-side stator circuit prior to closing the synchronizing contactor. Further, the SVCOM protection scheme is configured to calculate the zero-sequence voltage and compare against a pre-configured threshold and if the zero-sequence voltage exceeds the threshold, then the start-up process is stopped, and the wind turbine is tripped.

The geometry of the cables and its installation impacts the circuit capacitance and its distribution across the three phases. Additionally, the cable capacitance can change due to water absorption during wet weather conditions. These variations in cable capacitance across the three phases in ungrounded conditions (i.e.., prior to closing the synchronizing contactor) can falsely present itself as high zero-sequence voltage for the SVCOM protection scheme and result in nuisance tripping of converter/wind turbine, thereby preventing the wind turbine from going online.

Thus, the present disclosure is directed to systems and methods for minimizing or eliminating trips in a power generating asset prior to synchronization.

### BRIEF DESCRIPTION

Aspects and advantages of the invention will be set forth in part in the following description, or may be obvious from the description, or may be learned through practice of the invention.

In an aspect, the present disclosure is directed to a method for minimizing trips in a power generating asset prior to synchronization. The method includes providing a dynamic trip threshold to a protection scheme of the power generating asset; and modifying the dynamic trip threshold prior to and after synchronization of the power generating asset to minimize the trips in the power generating asset caused by the protection scheme of the power generating asset.

In another aspect, the present disclosure is directed to a power generating asset having a generator and a controller with a processor. The processor is programmed with a protection scheme defining a dynamic trip threshold configured to minimize trips in the power generating asset prior to synchronization. Further, the processor is configured to perform one or more operations, including but not limited to modifying the dynamic trip threshold prior to and after synchronization of the power generating asset to minimize the trips in the power generating asset caused by the protection scheme of the power generating asset.

In yet another aspect, the present disclosure is directed to a method for minimizing trips in a power generating asset prior to synchronization. The method includes providing a first trip threshold and a second trip threshold to a protection scheme of the power generating asset. The first trip threshold corresponds to a pre-synchronization state of the power generating asset. The second trip threshold corresponds to a post-synchronization state of the power generating asset. The method also includes implementing the first trip threshold during the pre-synchronization state of the power generating asset and the second trip threshold during the pre-synchronization state of the power generating asset to minimize the trips in the power generating asset prior to synchronization.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 illustrates a perspective view of an embodiment of a wind turbine according to the present disclosure;
FIG. 2 illustrates a simplified, internal view of an embodiment of a nacelle according to the present disclosure;
FIG. 3 illustrates an embodiment of a wind turbine power system according to the present disclosure;
FIG. 4 illustrates a block diagram of an embodiment of a controller suitable for use with the wind turbine power system shown in FIG. 1;
FIG. 5 illustrates a flow diagram of an embodiment of a method for minimizing trips in a power generating asset prior to synchronization according to the present disclosure;
FIG. 6 illustrates a block diagram of an embodiment of a protection scheme of a controller according to the present disclosure;
FIG. 7 illustrates a flow diagram of another embodiment of a method for minimizing trips in a power generating asset prior to synchronization according to the present disclosure; and
FIG. 8 illustrates a block diagram of another embodiment of a protection scheme of a controller according to the present disclosure.

### DETAILED DESCRIPTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of an embodiment can be used with another embodiment to yield a still further embodiment. Thus, it is intended that the present invention covers such modifications and variations as come within the scope of the appended claims and their equivalents.

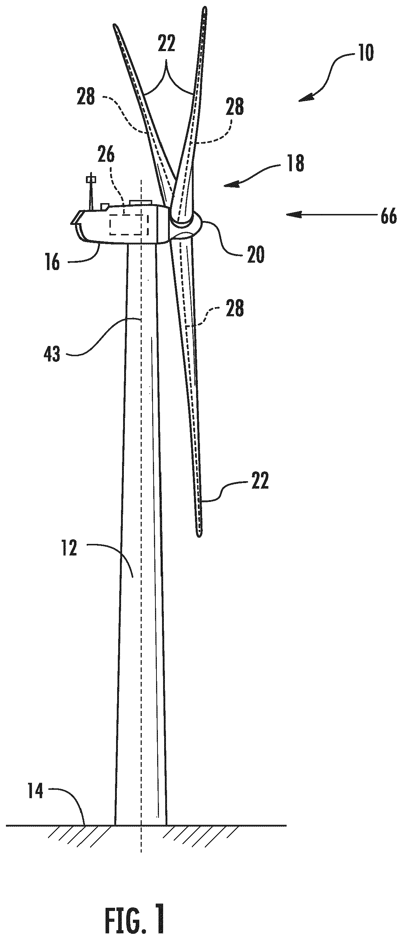

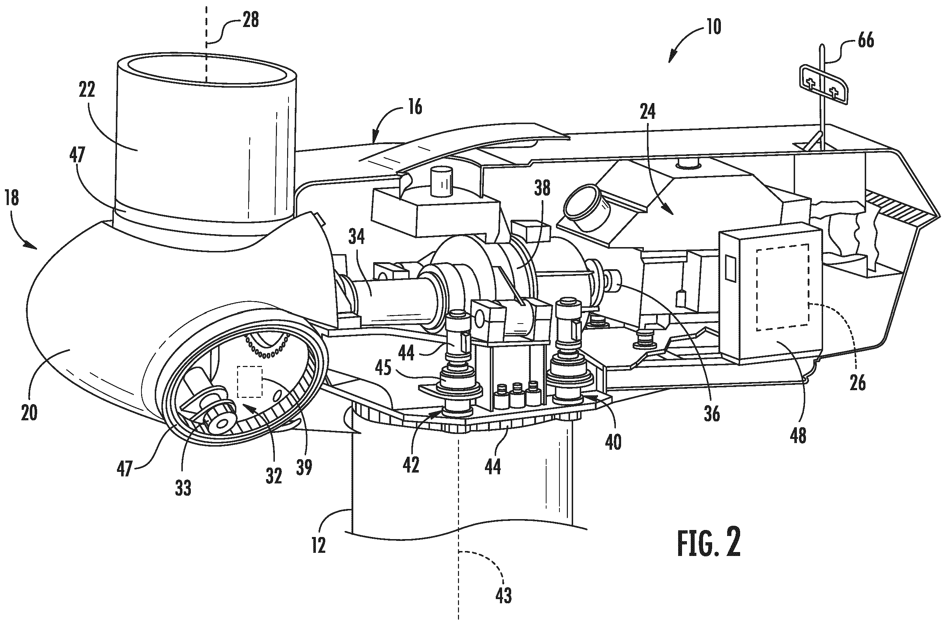

Referring now to the drawings, FIG. 1 illustrates a perspective view of an embodiment of a wind turbine 10 according to the present disclosure. As shown, the wind turbine 10 generally includes a tower 12 extending from a support surface 14, a nacelle 16 mounted on the tower 12, and a rotor 18 coupled to the nacelle 16. The rotor 18 includes a rotatable hub 20 and at least one rotor blade 22 coupled to and extending outwardly from the hub 20. For example, in the illustrated embodiment, the rotor 18 includes three rotor blades 22. However, in an alternative embodiment, the rotor 18 may include more or less than three rotor blades 22. Each rotor blade 22 may be spaced about the hub 20 to facilitate rotating the rotor 18 to enable kinetic energy to be transferred from the wind into usable mechanical energy, and subsequently, electrical energy. For instance, the hub 20 may be rotatably coupled to an electric generator 24 (FIG. 2) positioned within the nacelle 16 to permit electrical energy to be produced during normal operation of the wind turbine 10.

The wind turbine 10 may also include a turbine controller 26 centralized within the nacelle 16. For example, as shown, the turbine controller 26 is located in a top box cabinet 48 (FIG 2). However, in other embodiments, the turbine controller 26 may be located within any other component of the wind turbine 10 or at a location outside the wind turbine 10. Further, the turbine controller 26 may be communicatively coupled to any number of the components of the wind turbine 10 or be distributed in order to control the operation of such components and/or implement a control action. As such, the turbine controller 26 may include a computer or other suitable processing unit. Thus, in several embodiments, the turbine controller 26 may include suitable computer-readable instructions that, when implemented, configure the turbine controller 26 to perform various different functions, such as receiving, transmitting, and/or executing wind turbine control action signals, receiving, and analyzing sensor signals, and generating message signals.

By transmitting and executing wind turbine control action signals, the turbine controller 26 may generally be configured to control the various operating modes (e.g., start-up or shut-down sequences) and/or components of the wind turbine 10. For example, the controller 26 may be configured to control the yaw direction of the nacelle 16 about a yaw axis 43 to position the rotor blades 22 with respect to the direction 66 of the wind, thereby controlling the power output generated by the wind turbine 10. For example, as is described in greater detail herein, the turbine controller 26 may be configured to transmit control action signals/commands to one or more yaw drive mechanisms 40 (FIG. 2) of the wind turbine 10 such that the nacelle 16 may be rotated about the yaw axis 43. The turbine controller 26, which may be part of the turbine control circuit or entirely separate, may also operate auxiliary systems in the wind turbine 10 that includes pumps and motors in order to periodically cycle mechanical and electrical systems during off-grid exposure.

Referring now to FIG. 2, a simplified, internal view of an embodiment of the nacelle 16 of the wind turbine 10 shown in FIG. 1 is illustrated. As shown, the generator 24 may be disposed within the nacelle 16. In general, the generator 24 may be coupled to the rotor 18 for producing electrical power from the rotational energy generated by the rotor 18 during operation of the wind turbine 10. For example, as shown in the illustrated embodiment, the rotor 18 may include a rotor shaft 34 coupled to the hub 20 for rotation therewith. The rotor shaft 34 may, in turn, be rotatably coupled to a generator shaft 36 of the generator 24 through a gearbox 38. As is generally understood, the rotor shaft 34 may provide a low speed, high torque input to the gearbox 38 in response to rotation of the rotor blades 22 and the hub 20. The rotor shaft 34 usually comprises a flange 35 that facilitates mechanical engagement of the rotor shaft 34 to the hub 20. The gearbox 38 opposite the hub 20 may then be configured to convert the low speed, high torque input to a high speed, low torque output to drive the generator shaft 36 and, thus, the generator 24.

The nacelle 16 may include a yaw drive mechanism 40 configured to change the angle of the nacelle 16 relative to the wind (e.g., by engaging a yaw bearing 42 of the wind turbine 10 that is arranged between the nacelle 16 and the tower 12 of the wind turbine 10). Further, each yaw drive mechanism 40 may include a yaw drive motor 44 (e.g., any suitable electric or hydraulic motor), a yaw drive gearbox 45, and a yaw drive pinion 46. In such embodiments, the yaw drive motor 44 may be coupled to the yaw drive gearbox 45 so that the yaw drive motor 44 imparts mechanical force to the yaw drive gearbox 45. Similarly, the yaw drive gearbox 45 may be coupled to the yaw drive pinion 46 for rotation therewith. The yaw drive pinion 46 may, in turn, be in rotational engagement with the yaw bearing 42 coupled between the tower 12 and the nacelle 16 such that rotation of the yaw drive pinion 46 causes rotation of the yaw bearing 42. Thus, in such embodiments, rotation of the yaw drive motor 44 drives the yaw drive gearbox 45 and the yaw drive pinion 46, thereby rotating the yaw bearing 42 and the nacelle 16 about the yaw axis 43.

Similarly, the wind turbine 10 may include a pitch system 32 having one or more pitch adjustment mechanisms 33 communicatively coupled to the turbine controller 26, with each pitch adjustment mechanism(s) 33 being configured to rotate the pitch bearing 47 and thus the individual rotor blade(s) 22 about the pitch axis 28. The pitch adjustment mechanism(s) 33 described herein may have any suitable arrangement. In addition, the pitch adjustment mechanism(s) 33 may include a pitch motor, a pitch gearbox, and a pitch pinion. Furthermore, as shown, the pitch system 32 may also include a pitch system storage medium 39. In such embodiments, the pitch system storage medium 39 may include a battery, an ultracapacitor, and/or any other suitable storage medium.

In addition, the wind turbine 10 may also include one or more sensors 52 for monitoring various wind conditions of the wind turbine 10 and one or more sensor 37 for sensing load conditions acting on the wind turbine. For example, as shown in FIG. 2, the wind direction, wind speed, or any other suitable wind condition near the wind turbine 10 may be measured, such as through use of a suitable weather sensor 52. Suitable weather sensors 52 include, for example, Light Detection and Ranging ("LIDAR") devices, Sonic Detection and Ranging ("SODAR") devices, anemometers, wind vanes, barometers, radar devices (such as Doppler radar devices), Meteorological (Met) Mast systems, or any other in situ or remote sensing device(s) or system(s) that can provide weather, pressure, or wind information now known or later developed in the art.

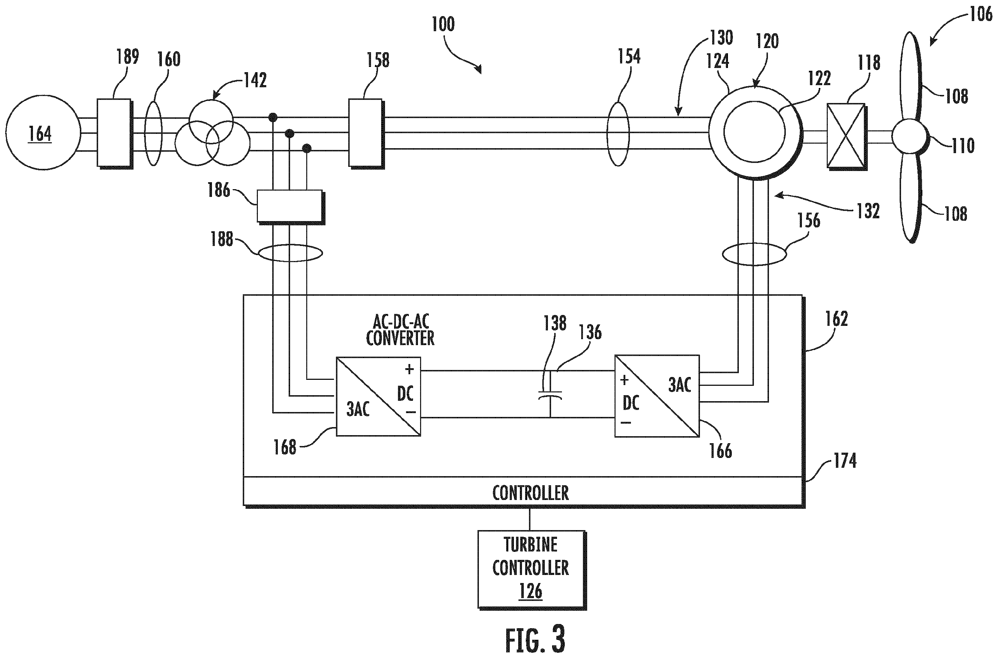

Referring now to FIG. 3, a schematic diagram of an embodiment of a wind turbine power system 100 according to the present disclosure is illustrated. Example aspects of the present disclosure are discussed with reference to the wind turbine power system 100 of FIG. 3 for purposes of illustration and discussion. Those of ordinary skill in the art, using the disclosures provided herein, should understand that example aspects of the present disclosure are also applicable in other power systems, such as a wind, solar, gas turbine, or other suitable power generation system.

In the wind turbine power system 100, a rotor 106 includes a plurality of rotor blades 108 coupled to a rotatable hub 110, and together define a propeller. The propeller is coupled to an optional gearbox 118, which is, in turn, coupled to a generator 120 having a rotor 122 and a stator 124. In accordance with aspects of the present disclosure, the generator 120 may be any suitable generator, including for example, a doubly fed induction generator (DFIG). The generator 120 is typically coupled to a stator bus 154 and a power converter 162 via a rotor bus 156. The stator bus 154 provides an output multiphase power (e.g., three-phase power) from a stator of the generator 120 and the rotor bus 156 provides an output multiphase power (e.g., three-phase power) of a rotor of the generator 120.

The power converter 162 includes a rotor-side converter 166 coupled to a line-side converter 168. The GENERATOR 120 is coupled to the rotor-side converter 166 via the rotor bus 156. The line-side converter 168 is coupled to a line-side bus 188. Further, as shown, the stator bus 154 may be directly connected to the line-side bus 188. In example configurations, the rotor-side converter 166 and the line-side converter 168 are configured for normal operating mode in a three-phase, PWM arrangement using insulated gate bipolar transistor (IGBT) switching elements, which are discussed in more detail herein. The rotor-side converter 166 and the line-side converter 168 can be coupled via a DC link 136 across which is the DC link capacitor 138. In alternative embodiments, the stator bus 154 and the power converter 162 may be connected to separate isolated windings of a transformer (not shown), i.e., at the junction of the generator breaker 158 and the converter breaker 186.

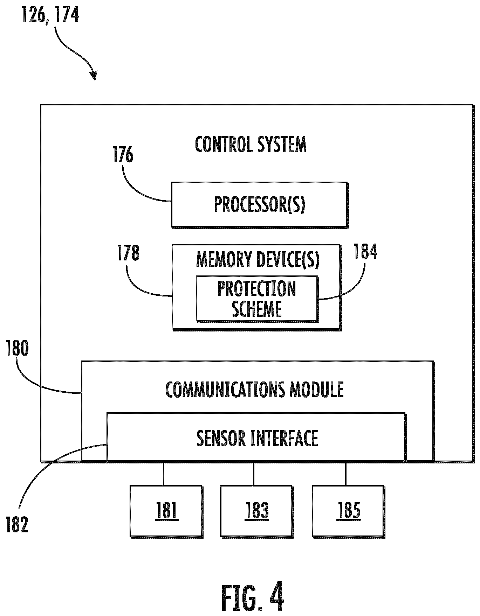

The power converter 162 can be coupled to a controller 174 to control the operation of the rotor-side converter 166 and the line-side converter 168 and other aspects of the wind turbine power system 100. The converter controller 174 may be further coupled with a turbine controller 126. For example, as shown particularly in FIG. 4, the controllers 126, 174 can include any number of control devices. In one implementation, for example, the controllers 126, 174 can include one or more processor(s) 176 and associated memory device(s) 178 configured to perform a variety of computer-implemented functions and/or instructions (e.g., performing the methods, steps, calculations and the like and storing relevant data as disclosed herein). The instructions when executed by the processor 176 can cause the processor 176 to perform operations, including providing control commands (e.g., pulse width modulation commands) to the switching elements of the power converter 162 and other aspects of the wind turbine power system 100.

In addition, as shown, the controller(s) described herein may include a protection scheme 184, which generally refers to hardware or software that can be implemented or otherwise controlled by the processor(s) 176. In such embodiments, for example, the protection scheme may be a stator voltage common mode (SVCOM) protection scheme, a blackstart protection scheme, an energization protection scheme, or similar, and as further explained herein. Thus, in an embodiment, as further described herein, the protection scheme 184 defines a dynamic trip threshold configured to minimize trips in the wind turbine power system 100, e.g., prior to synchronization.

Additionally, the controllers 126, 174 may also include a communications module 180 to facilitate communications between the controllers 126, 174 and the various components of the wind turbine power system 100, e.g. any of the components of FIGS. 1-3. Further, the communications module 180 may include a sensor interface 182 (e.g., one or more analog-to-digital converters) to permit signals transmitted from one or more sensors to be converted into signals that can be understood and processed by the processors 176. It should be appreciated that the sensors (e.g., sensors 181, 183, 185) may be communicatively coupled to the communications module 180 using any suitable means. For example, as shown in FIG. 4, the sensors 181, 183, 185 are coupled to the sensor interface 182 via a wired connection. However, in other embodiments, the sensors 181, 183, 185 may be coupled to the sensor interface 182 via a wireless connection, such as by using any suitable wireless communications protocol known in the art. As such, the processor 176 may be configured to receive one or more signals from the sensors.

As used herein, the term "processor" refers not only to integrated circuits referred to in the art as being included in a computer, but also refers to a controller, a microcontroller, a microcomputer, a programmable logic controller (PLC), an application specific integrated circuit, and other programmable circuits. The processor 176 is also configured to compute advanced control algorithms and communicate to a variety of Ethernet or serial-based protocols (Modbus, OPC, CAN, etc.). Additionally, the memory device(s) 178 may generally comprise memory element(s) including, but not limited to, computer readable medium (e.g., random access memory (RAM)), computer readable non-volatile medium (e.g., a flash memory), a floppy disk, a compact disc-read only memory (CD-ROM), a magnetooptical disk (MOD), a digital versatile disc (DVD) and/or other suitable memory elements. Such memory device(s) 178 may generally be configured to store suitable computer-readable instructions that, when implemented by the processor(s) 176, configure the controllers 126, 174 to perform the various functions as described herein.

In operation, alternating current power generated at the GENERATOR 120 by rotation of the rotor 106 is provided via a dual path to a grid bus 160 and ultimately to an electrical grid 164. The dual paths are defined by a generator power path 130 and a converter power path 132. On the converter power path 132, sinusoidal multi-phase (e.g., three-phase) alternating current (AC) power is provided to the power converter 162 via the rotor bus 156.

The rotor-side power converter 166 converts the AC power provided from the rotor bus 156 into direct current (DC) power and provides the DC power to the DC link 136. Switching elements (e.g., IGBTs) used in bridge circuits of the rotor side power converter 166 can be modulated to convert the AC power provided from the rotor bus 156 into DC power suitable for the DC link 136.

The line-side converter 168 converts the DC power on the DC link 136 into AC output power suitable for the electrical grid 160. In particular, switching elements (e.g., IGBTs) used in bridge circuits of the line-side power converter 168 can be modulated to convert the DC power on the DC link 136 into AC power on the line-side bus 188. The AC power from the power converter 162 can be combined with the power from the stator of the GENERATOR 120 to provide multi-phase power (e.g., three-phase power) having a frequency maintained substantially at the frequency of the electrical grid 160 (e.g., 50 Hz/60 Hz). Further, as shown, the associated electrical power can be transmitted to a main transformer 142 that is typically connected to the electrical grid 160. Thus, the main transformer 142 steps up the voltage amplitude of the electrical power such that the transformed electrical power may be further transmitted to the power grid 160.

Various circuit breakers and switches, such as a generator breaker 158, a converter breaker 186, and a synchronizing breaker 189 (which may be a synchronizing contactor), can be included in the wind turbine power system 100 to connect or disconnect corresponding buses, for example, when current flow is excessive and can damage components of the wind turbine power system 100 or for other operational considerations. Additional protection components can also be included in the wind turbine power system 100.

The power converter 162 can receive control signals from, for instance, the controller 174. The control signals can be based, among other things, on sensed conditions or operating characteristics of the wind turbine power system 100. Typically, the control signals provide for control of the operation of the power converter 162. For example, feedback in the form of sensed speed of the generator 120 can be used to control the conversion of the output power from the rotor bus 156 to maintain a proper and balanced multi-phase (e.g., three-phase) power supply. Other feedback from other sensors can also be used by the controller 174 to control the power converter 162, including, for example, stator and rotor bus voltages and current feedbacks. Using the various forms of feedback information, switching control signals (e.g., gate timing commands for IGBTs), stator synchronizing control signals, and circuit breaker signals can be generated.

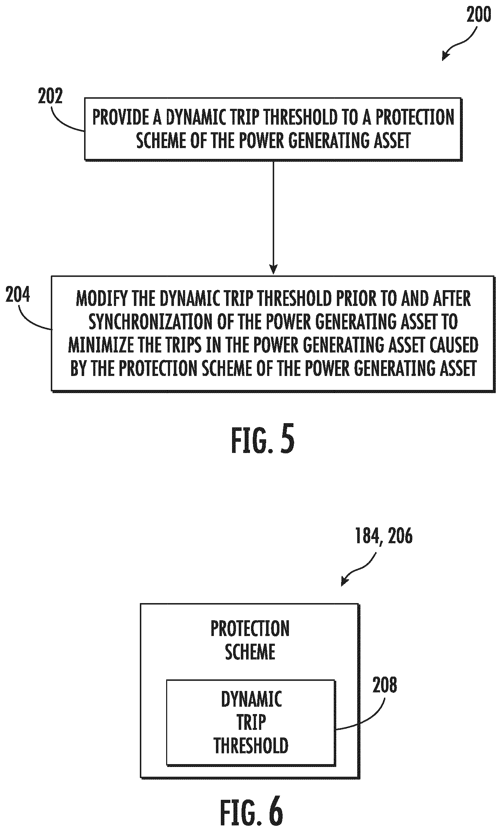

Referring now to FIG. 5, a flow diagram of an embodiment of a method 200 for minimizing trips in the wind turbine power system 100 prior to synchronization according to the present disclosure is illustrated. In general, the method 200 described herein generally applies to the wind turbine power system 100 described above. However, it should be appreciated that the disclosed method 200 may be implemented using any other suitable power system. Further, FIG. 5 depicts steps performed in a particular order for purposes of illustration and discussion. Those of ordinary skill in the art, using the disclosures provided herein, will understand that various steps of any of the methods disclosed herein can be adapted, omitted, rearranged, or expanded in various ways without deviating from the scope of the present disclosure.

Referring particularly to FIG. 5, as shown at (202), the method 200 includes providing a dynamic trip threshold to a protection scheme of the power generating asset. For example, as shown in FIG. 6, a block diagram of an embodiment of a protection scheme 206, similar to the protection scheme 184 of FIG. 4, may include a dynamic trip threshold 208 stored or programmed therein. Furthermore, in an embodiment, as mentioned, the protection scheme 184 may be a SVCOM protection scheme, a blackstart protection scheme, an energization protection scheme, or any other suitable protection scheme. For example, in an embodiment, the SVCOM protection scheme utilizes the three-phase voltage feedback to detect a non-zero value that is compared to a threshold to indicate the health of the electrical insulation. For a blackstart protection scheme, the scheme is looking forward to the future, since blackstart applications naturally have different conditions at the time before the entire system is connected to the grid and supporting load. These type of protection schemes would likely want to have dynamic values for some. An example energization protection scheme is a SVCOM protection scheme, which detects an out of bounds limit to prevent damage if the system is allowed to progress to the next step in energization.

Furthermore, as shown at (204), the method 200 includes modifying the dynamic trip threshold prior to and after synchronization of the power generating asset to minimize the trips in the power generating asset caused by the protection scheme of the power generating asset.

More specifically, in particular embodiments, the protection scheme may correspond to the SVCOM protection scheme, which may be part of a generator-side stator circuit of the wind turbine power system 100. In such embodiments, trips can be caused by an interaction of the SVCOM protection scheme with a cable capacitance of low voltage power cables utilized in the tower 12 of the wind turbine 10 to transfer power from the generator 120 in the nacelle 16 of the wind turbine 10 at a base of the tower 12. Thus, to minimize such trips, during a pre-synchronization state (i.e., a start-up sequence of the wind turbine power system 100), the method 200 may include increasing the dynamic trip threshold to allow the power generating asset to synchronize when higher levels of common mode voltage are present. Moreover, during a post-synchronization state (i.e., during normal operation of the wind turbine power system 100), the method 200 may include decreasing the dynamic trip threshold so as to monitor for stator circuit issues while the power generating asset is producing power.

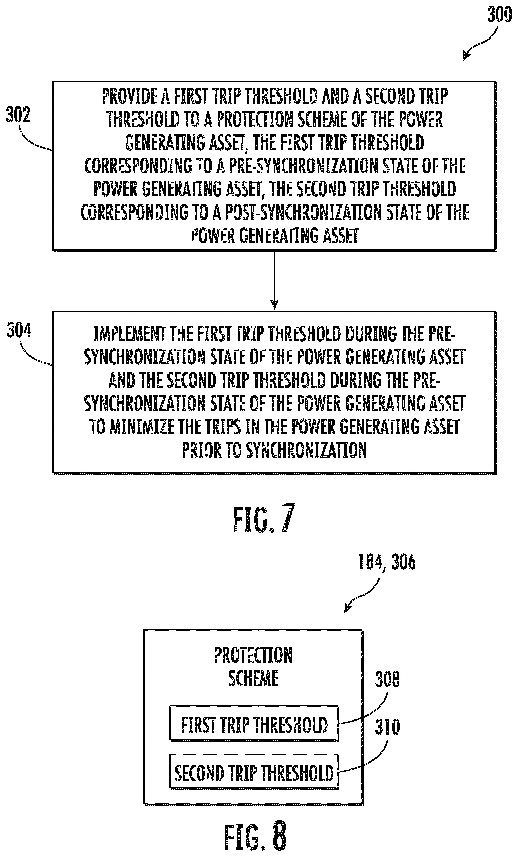

Referring now to FIG. 7, a flow diagram of an embodiment of a method 300 for minimizing trips in a power generating asset, such as the wind turbine power system 100, prior to synchronization according to the present disclosure is illustrated. In general, the method 300 described herein generally applies to the wind turbine power system 100 described above. However, it should be appreciated that the disclosed method 300 may be implemented using any other suitable power system. Further, FIG. 7 depicts steps performed in a particular order for purposes of illustration and discussion. Those of ordinary skill in the art, using the disclosures provided herein, will understand that various steps of any of the methods disclosed herein can be adapted, omitted, rearranged, or expanded in various ways without deviating from the scope of the present disclosure.

Referring particularly to FIG. 7, as shown at (302), the method 300 providing a first trip threshold and a second trip threshold to a protection scheme of the power generating asset, the first trip threshold corresponding to a pre-synchronization state of the power generating asset, the second trip threshold corresponding to a post-synchronization state of the power generating asset. For example, as shown in FIG. 8, a block diagram of another embodiment of a protection scheme 306, similar to the protection scheme 184 of FIG. 4, may include a first trip threshold 308 and a second trip threshold 310 stored or programmed therein. As mentioned, the protection scheme may be a SVCOM protection scheme, a blackstart protection scheme, an energization protection scheme, or similar. Further, in an embodiment, the first trip threshold is higher than the second trip threshold.

As shown at (304), the method 300 includes implementing the first trip threshold during the pre-synchronization state of the power generating asset and the second trip threshold during the pre-synchronization state of the power generating asset to minimize the trips in the power generating asset prior to synchronization.

In certain embodiments, for example, the protection scheme may correspond to SVCOM protection scheme. Thus, in such embodiments, during the pre-synchronization state, the method 300 may include setting the first trip threshold high enough to allow the power generating asset to synchronize when higher levels of common mode voltage are present. Furthermore, during the post-synchronization state, the method 300 may include setting the second trip threshold lower enough to allow for monitoring of stator circuit issues while the power generating asset is producing power.

Accordingly, systems and methods of the present disclosure are configured to prevent wind turbines from tripping due to harmless SVCOM levels caused by variations in cable capacitance during start-up. Thus, systems and methods of the present disclosure reduce nuisance trips and increase turbine availability. Moreover, systems and methods of the present disclosure enable continued use of lower cost low voltage power cables in wind turbines, as well as continued use of economical down-tower converter architecture. In addition, such cables allow for taller wind turbine towers, thereby enabling more energy capture.

Exemplary embodiments of a wind turbine, a controller for a wind turbine, and methods of controlling a wind turbine are described above in detail. The methods, wind turbine, and controller are not limited to the specific embodiments described herein, but rather, components of the wind turbine and/or the controller and/or steps of the methods may be utilized independently and separately from other components and/or steps described herein. For example, the controller and methods may also be used in combination with other wind turbine power systems and methods and are not limited to practice with only the power system as described herein. Rather, the exemplary embodiment can be implemented and utilized in connection with many other wind turbine or power system applications, such as solar power systems.

Although specific features of various embodiments of the invention may be shown in some drawings and not in others, this is for convenience only. In accordance with the principles of the invention, any feature of a drawing may be referenced and/or claimed in combination with any feature of any other drawing.

Further aspects of the invention are provided by the subject matter of the following clauses:
A method for minimizing trips in a power generating asset prior to synchronization, the method comprising: providing a dynamic trip threshold to a protection scheme of the power generating asset; and modifying the dynamic trip threshold prior to and after synchronization of the power generating asset to minimize the trips in the power generating asset caused by the protection scheme of the power generating asset.

The method of any preceding clause, wherein the protection scheme comprises at least one of a stator voltage common mode (SVCOM) protection scheme, a blackstart protection scheme, or an energization protection scheme.

The method of any preceding clause, wherein the protection scheme is the SVCOM protection scheme, and wherein, during a pre-synchronization state, modifying the dynamic trip threshold further comprises increasing the dynamic trip threshold to allow the power generating asset to synchronize when higher levels of common mode voltage are present.

The method of any preceding clause, wherein, during a post-synchronization state, modifying the dynamic trip threshold further comprises decreasing the dynamic trip threshold so as to monitor for stator circuit issues while the power generating asset is producing power.

The method of any preceding clause, wherein the power generating asset comprises a wind turbine power system.

The method of any preceding clause, wherein the trips are caused by an interaction of the SVCOM protection scheme with a cable capacitance of low voltage power cables utilized in a tower of the wind turbine power system to transfer power from a generator in a nacelle of the wind turbine power system at a base of the tower.

The method of any preceding clause, wherein the SVCOM protection scheme is part of a generator-side stator circuit of the wind turbine power system.

A power generating asset, comprising: a generator; and a controller comprising a processor, the processor being programmed with a protection scheme defining a dynamic trip threshold configured to minimize trips in the power generating asset prior to synchronization, the processor configured to perform one or more operations, the one or more operations comprising modifying the dynamic trip threshold prior to and after synchronization of the power generating asset to minimize the trips in the power generating asset caused by the protection scheme of the power generating asset.

The power generating asset of any preceding clause, wherein the protection scheme comprises at least one of a stator voltage common mode (SVCOM) protection scheme, a blackstart protection scheme, or an energization protection scheme.

The power generating asset of any preceding clause, wherein the protection scheme is the SVCOM protection scheme, and wherein, during a pre-synchronization state, modifying the dynamic trip threshold further comprises increasing the dynamic trip threshold to allow the power generating asset to synchronize when higher levels of common mode voltage are present.

The power generating asset of any preceding clause, wherein, during a post-synchronization state, modifying the dynamic trip threshold further comprises decreasing the dynamic trip threshold so as to monitor for stator circuit issues while the power generating asset is producing power.

The power generating asset of any preceding clause, wherein the power generating asset comprises a wind turbine power system.

The power generating asset of any preceding clause, wherein the trips are caused by an interaction of the SVCOM protection scheme with a cable capacitance of low voltage power cables utilized in a tower of the wind turbine power system to transfer power from a generator in a nacelle of the wind turbine power system at a base of the tower, and wherein the SVCOM protection scheme is part of a generator-side stator circuit of the wind turbine power system.

A method for minimizing trips in a power generating asset prior to synchronization, the method comprising: providing a first trip threshold and a second trip threshold to a protection scheme of the power generating asset, the first trip threshold corresponding to a pre-synchronization state of the power generating asset, the second trip threshold corresponding to a post-synchronization state of the power generating asset; and implementing the first trip threshold during the pre-synchronization state of the power generating asset and the second trip threshold during the pre-synchronization state of the power generating asset to minimize the trips in the power generating asset prior to synchronization.

The method of any preceding clause, wherein the protection scheme comprises at least one of a stator voltage common mode (SVCOM) protection scheme, a blackstart protection scheme, or an energization protection scheme.

The method of any preceding clause, wherein the first trip threshold is higher than the second trip threshold.

The method of any preceding clause, wherein the protection scheme is the SVCOM protection scheme, and wherein, during the pre-synchronization state, setting the first trip threshold high enough to allow the power generating asset to synchronize when higher levels of common mode voltage are present.

The method of any preceding clause, wherein, during the post-synchronization state, setting the second trip threshold lower enough to allow for monitoring of stator circuit issues while the power generating asset is producing power.

The method of any preceding clause, wherein the power generating asset comprises a wind turbine power system.

The method of any preceding clause, wherein the trips are caused by an interaction of the SVCOM protection scheme with a cable capacitance of low voltage power cables utilized in a tower of the wind turbine power system to transfer power from a generator in a nacelle of the wind turbine power system at a base of the tower, and wherein the SVCOM protection scheme is part of a generator-side stator circuit of the wind turbine power system.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A method for minimizing trips in a power generating asset prior to synchronization, the method comprising:
providing a dynamic trip threshold to a protection scheme of the power generating asset; and
modifying the dynamic trip threshold prior to and after synchronization of the power generating asset to minimize the trips in the power generating asset caused by the protection scheme of the power generating asset.

2. The method of claim 1, wherein the protection scheme comprises at least one of a stator voltage common mode (SVCOM) protection scheme, a blackstart protection scheme, or an energization protection scheme.

3. The method of claim 2, wherein the protection scheme is the SVCOM protection scheme, and
wherein, during a pre-synchronization state, modifying the dynamic trip threshold further comprises increasing the dynamic trip threshold to allow the power generating asset to synchronize when higher levels of common mode voltage are present.

4. The method of claim 3, wherein, during a post-synchronization state, modifying the dynamic trip threshold further comprises decreasing the dynamic trip threshold so as to monitor for stator circuit issues while the power generating asset is producing power.

5. The method of claims 3-4, wherein the power generating asset comprises a wind turbine power system.

6. The method of claim 5, wherein the trips are caused by an interaction of the SVCOM protection scheme with a cable capacitance of low voltage power cables utilized in a tower of the wind turbine power system to transfer power from a generator in a nacelle of the wind turbine power system at a base of the tower.

7. The method of claims 5-6, wherein the SVCOM protection scheme is part of a generator-side stator circuit of the wind turbine power system.

8. A power generating asset, comprising:
a generator; and
a controller comprising a processor, the processor being programmed with a protection scheme defining a dynamic trip threshold configured to minimize trips in the power generating asset prior to synchronization, the processor configured to perform one or more operations, the one or more operations comprising modifying the dynamic trip threshold prior to and after synchronization of the power generating asset to minimize the trips in the power generating asset caused by the protection scheme of the power generating asset.

9. The power generating asset of claim 8, wherein the protection scheme comprises at least one of a stator voltage common mode (SVCOM) protection scheme, a blackstart protection scheme, or an energization protection scheme.

10. The power generating asset of claim 9, wherein the protection scheme is the SVCOM protection scheme, and wherein, during a pre-synchronization state, modifying the dynamic trip threshold further comprises increasing the dynamic trip threshold to allow the power generating asset to synchronize when higher levels of common mode voltage are present.

11. The power generating asset of claim 10, wherein, during a post-synchronization state, modifying the dynamic trip threshold further comprises decreasing the dynamic trip threshold so as to monitor for stator circuit issues while the power generating asset is producing power.

12. The power generating asset of claims 10-11, wherein the power generating asset comprises a wind turbine power system.

13. The power generating asset of claim 12, wherein the trips are caused by an interaction of the SVCOM protection scheme with a cable capacitance of low voltage power cables utilized in a tower of the wind turbine power system to transfer power from a generator in a nacelle of the wind turbine power system at a base of the tower, and wherein the SVCOM protection scheme is part of a generator-side stator circuit of the wind turbine power system.
